# EUROPÄISCHE PATENTSCHRIFT

(11) **EP 3 244 122 B1**
(45) Veröffentlichungstag und Bekanntmachung des Hinweises auf die Patenterteilung: **21.10.2020**
(21) Anmeldenummer: 16198666.6
(22) Anmeldetag: 14.11.2016
(51) Int. Cl.: F16M 13/02, F16M 11/08, F16M 11/20

(54) **TRAGVORRICHTUNG**
CARRYING DEVICE
DISPOSITIF DE SUPPORT

(30) Priorität: 12.05.2016 DE 102016108802
(43) Veröffentlichungstag der Anmeldung: 15.11.2017
(73) Patentinhaber: Tragfreund GmbH, 98574 Schmalkalden (DE)
(72) Erfinder: SCHULZE-BECKINGHAUSEN, Andreas, 31515 Wunstorf (DE); MÜHLENBECK, Andreas, 36433 Bad Salzungen (DE); WOLFRAM, Erik, 07745 Jena (DE)
(74) Vertreter: Gramm, Lins & Partner Patent- und Rechtsanwälte PartGmbB

(56) Entgegenhaltungen:
- EP-A1- 2 937 617
- EP-A1- 2 937 619
- EP-B1- 2 325 541
- WO-A1-2014/009188

## Beschreibung

Die Erfindung betrifft eine Tragvorrichtung mit einem schwenkbar gelagerten Tragarm zum Tragen von Geräten, wobei die Tragvorrichtung ein Rohrstück hat, das schwenkbar an einem Halteabschnitt gelagert ist, und wobei ein zwischen dem Rohrstück und dem Halteabschnitt zur Beschränkung des Schwenkwinkels wirkender Anschlag vorhanden ist.

WO 2014/009188 A1 offenbart einen Tragarmanschluss, bei dem an einem Tragarm ein Gehäusering und ein Tragarmring angeordnet sind. Der Gehäusering ist in einer Tragarmaufnahme befestigt, in der ein radial nach innen vorspringende Schulter vorgesehen ist, die einen axialen Anschlag für den Tragarmring ausbildet. Der Tragarmring hat eine axial vorspringende Nase, die zusammen mit der Schulter und einer Ausnehmung im Tragarmring einen Anschlag zur Begrenzung des Drehwinkels des Tragarms bereitstellt.

EP 2 325 541 B1 offenbart einen anpassbaren Stoppmechanismus für eine drehbare Verbindung mit einem auf ein Tragrohr aufsteckbarem Anschlagring mit Anschlagnasen.

EP 0 496 191 B1 offenbart eine Geräteträgerkupplung für ein an einem Tragrohr drehbar aufgehängtes Steuergehäuse. Ein Anschlagring ist in ein Tragrohr einsetzbar. Es können Anschlagstifte in Einstecklöcher eingeschraubt werden, um einen Anschlag zusammen mit einer Nase des Kupplungsgehäuses zu bilden.

EP 2 096 349 B1 beschreibt eine Aufhängung für eine Operationsleuchte mit einem um ein Halteelement drehbaren Koppelelement, das mit einem an dem Halteelement vorgesehenen Anschlag in Eingriff treten kann. Das Koppelelement ist als ein auf ein Rohrstück aufsteckbarer Drehring mit einem Fenster an seiner Mantelfläche ausgebildet, in das der Anschlag hineinragt.

EP 2 937 619 A1 offenbart eine Stativvorrichtung mit einem anpassbaren Anschlagmechanismus zur Einstellung unterschiedlicher Drehwinkel gemäß dem Oberbegriff des Anspruchs 1. Der Anschlagmechanismus ist dabei mehrteilig aufgebaut. Dieser wird derartig an ein Stativ und eine Buchse montiert, sodass diese eine Anschlageinrichtungen mit einem Gegenanschlag bereitstellt.

Ausgehend hiervon ist es Aufgabe der vorliegenden Erfindung, eine verbesserte Tragvorrichtung mit der Möglichkeit zur Bildung eines Anschlags bei einfachem, variabel anpassbarem und zuverlässigem Aufbau zu schaffen.

Die Aufgabe wird mit der Tragvorrichtung mit den Merkmalen des Anspruchs 1 gelöst. Vorteilhafte Ausführungsformen sind in den Unteransprüchen beschrieben. Es wird vorgeschlagen, dass das freie Ende des Rohrstücks über den Umfang verteilt angeordnete Kopplungsvorsprünge hat, und ein an den Umfang des Rohrstücks angepasstes Anschlagzwischenstück mit über den Umfang verteilt angeordneten Ergänzungs-Kopplungsvorsprüngen vorgesehen ist. Die Ergänzungs-Kopplungsvorsprünge sind zum Eintauchen in die Zwischenräume zwischen benachbarten Kopplungsvorsprüngen des Rohrstücks ausgebildet. Das Anschlagzwischenstück hat eine mit einem Anschlagelement des Halteabschnittes zusammenwirkende Anschlagkontur.

Die Kopplungsvorsprünge sind als am Ende des Rohrstücks der Tragvorrichtung über den Umfang verteilt angeordnete Zungen ausgebildet sein, die mit Zwischenräumen im Abstand voneinander angeordnet sind. Es ist dann ein an den Umfang des Rohrstücks angepasstes Anschlagzwischenstück vorgesehen, das ebenfalls mit über den Umfang verteilt angeordneten Ergänzungszungen zur Bildung der Ergänzungs-Kopplungsvorsprünge versehen ist, die im Abstand voneinander angeordnet sind. Die Ergänzungszungen sind dabei zum Eintauchen in die Zwischenräume zwischen den Zungen des Rohrstücks ausgebildet.

Die Kopplungsvorsprünge und Ergänzungs-Kopplungsvorsprünge können aber auch als ineinandergreifende Verzahnungen am Umfang des Rohrstücks und des Anschlagzwischenstückes ausgebildet sein; die durch radial am Umfang des Rohrstücks abragende Kopplungsvorsprünge und radial am Umfang des Anschlagzwischenstückes gebildet sind.

Bei diesen Tragvorrichtungen wird der Anschlag somit durch ein an das freie Ende des Rohrstücks angesetztes Zwischenelement gebildet, das entweder ggf. mit Überdeckung in longitudinaler Richtung des Rohrstücks an der Stirnkante am Ende des Rohrstücks anliegt oder in radialer Richtung des Rohrstücks mit diesem verkoppelt wird.

Das Anschlagzwischenstück kann mit seinen Ergänzungszungen dabei in die Zwischenräume der von dem freien Ende des Rohrstücks abragenden Zungen des Rohrstücks so eingesetzt werden, dass sich durch die Zungen und Ergänzungszungen das Rohrstück umfangsseitig gegebenenfalls unter Vorhandensein von kleinen Zwischenräumen oder Spalten ergänzt. Das Anschlagzwischenstück verlängert damit praktisch das Rohrstück in Erstreckungsrichtung des Rohrstücks und ist mit Hilfe der Ergänzungszungen durch Zusammenwirken mit den Zungen des Rohrstücks drehfest mit dem Rohrstück verbindbar.

Denkbar ist aber auch eine Verzahnung von radial am Umfang des Rohrstücks abragenden Kopplungsvorsprüngen mit entgegengesetzt hierzu radial am Umfang des Anschlagszwischenstückes abragenden Ergänzungs-Kopplungsvorsprüngen, wenn das Rohrstück und das Anschlagszwischenstück ineinandergeschoben sind.

Damit wird zudem erreicht, dass auf sehr einfache Weise wahlweise ein Anschlag bereitgestellt werden kann, dessen Anschlagposition sich zudem noch schrittweise in durch den Abstand der Kopplungsvorsprünge vorgegebenen Winkeln einstellen lässt. Dieser Winkel kann z.B. durch die Breite der Zungen bzw. den Verzahnungsgrad definiert sein. Mit der Verzahnung lassen sich kleinere Winkelschritte realisieren, als mit den Zungen.

Das Anschlagzwischenstück kann auch auf einfache Weise nachträglich vom Nutzer installiert oder entfernt werden und ist sehr kompakt. Es kann ohne großen Aufwand hergestellt und zur Verfügung gestellt werden und ermöglicht eine Tragvorrichtung mit wenig Einzelteilen, mit denen dennoch eine große Variantenvielfalt bereitgestellt werden kann.

Die Tragvorrichtung kann ein Schwenkgelenk haben oder als mehrarmige Tragvorrichtung mit mehreren Schwenkgelenken realisiert sein. Mindestens eines der Schwenkgelenke hat dann ein Anschlagzwischenstück.

Bei einem Deckentragarm ist denkbar, dass benachbart zur Deckenaufhängung ein Schwenkgelenk mit größerem Durchmesser als der Durchmesser eines benachbart zum getragenen Gerät angeordneten Schwenkgelenks vorhanden ist. Die Durchmesser der Anschlagzwischenstücke sind dann entsprechend angepasst und für eine Tragvorrichtung für die mehreren Schwenkgelenke unterschiedlich.

Die Anschlagkontur des Anschlagzwischenstücks kann einen in entgegengesetzte Richtung zu den Ergänzungszungen abragenden Anschlaglappen aufweisen. Damit wird durch einen in Erstreckungsrichtung des Rohrstücks bzw. in Erstreckungsrichtung der Zunge des Rohrstücks abragenden Materiallappen genutzt, um eine Anschlagkontur für ein korrespondierendes Anschlagelement am Halteabschnitt bereitzustellen. Dieser Anschlaglappen kann eine stark reduzierte Breite haben und damit nur eine Anschlagnase bilden. Die Breite des Anschlaglappens legt den Schwenkwinkel fest, um den das Rohrstück gedreht werden kann.

Die Zungen des Rohrstücks und die Ergänzungszungen des Anschlagzwischenstücks haben an ihrer Außenseite eine Rastmulde. Die Tragvorrichtung hat dann einen Haltering zum Einsetzen in eine durch die Rastmulden der Zungen und Ergänzungszungen im Zustand, bei dem das Anschlagzwischenstück an das Rohrstück angesetzt ist, gebildete umlaufende Rastnut. Die in einer gemeinsamen umlaufenden Flucht liegenden Rastmulden bilden somit eine gemeinsame Rastnut zur Aufnahme eines Halterings, der den Umfang des Rohrstücks umgibt und in die Rastmulden eingesetzt wird. Damit wird das Anschlagzwischenstück an dem Rohrstück gesichert und ist dennoch lösbar, wenn der Haltering vorher wieder abgenommen wird. Der Haltering kann bspw. ein umlaufender Stahlring sein.

Das Eintauchen der Ergänzungszungen in die zwischen den Zungen des Rohrstücks gebildeten Zwischenräume wird somit in Verbindung mit Rastmulden an der Außenseite der Zungen und Ergänzungszungen genutzt, um das Anschlagzwischenstück auf einfache und überaus kompakte Weise an dem Rohrstück zu sichern.

Denkbar ist aber auch, dass die Ergänzungszungen einstückig am Innenumfang einer Hülse, d.h. eines kurzen rohrförmigen Anschlagzwischenstückes angeformt sind, wobei die Hülse zum Aufstecken auf das Ende des Rohrstücks ausgebildet ist. Damit können die an dem Anschlagzwischenstück wirkenden Kräfte und Momente gut abgefangen werden.

Die Bauteilspannungen im Rohrstück und im Anschlagzwischenstück können aber noch weiter reduziert werden, wenn die Kopplungsvorsprünge des Rohrstücks als über den Umfang verteilt angeordnete Zahnflanken ausgebildet sind, die mit Zahnzwischenräumen im Abstand voneinander angeordnet sind. Die Ergänzungs-Kopplungsvorsprünge des Anschlagzwischenstücks sind dabei als über den Umfang verteilt angeordnete Zahnflanken ausgebildet, die mit Zahnzwischenräumen im Abstand voneinander angeordnet sind. Die Zahnflanken bilden eine Verzahnung zur formschlüssigen Kopplung des Anschlagzwischenstücks an dem Rohrstück. Insbesondere das durch das Anschlagen verursachte Kippmoment kann von der breiten Verzahnung sehr gut aufgenommen werden.

Die Kopplungsvorsprünge des Rohrstücks können beispielsweise am Außenumfang des Rohrstücks und die Ergänzungs-Kopplungsvorsprünge des Anschlagzwischenstücks am Innenumfang des Rohrstücks angeordnet sein, so dass das Anschlagzwischenstück auf das freie Ende des Rohrstücks aufgeschoben wird.

Der Halteabschnitt kann ein Lagerrohrstück zum Einstecken in das Rohrstück der Tragvorrichtung haben. Das Rohrstück umgibt somit das Lagerrohrstück des Halteabschnittes und ist auf diese Weise kippfest und dennoch schwenkbar an dem Halteabschnitt gelagert. Das dabei freibleibende Ende des Rohrstücks, das sich zu einem Hauptkörper des Halteabschnittes hin erstreckt, wird dann zur Aufnahme des Anschlagzwischenstücks und zur Bildung des Anschlags genutzt.

Von dem Halteabschnitt kann ein Anschlagstift in Richtung der Zungen des an dem Halteabschnitt gelagerten Rohrstücks abragen. Dieser Anschlagstift bildet dann zusammen mit der Anschlagkontur des Anschlagzwischenstücks einen den Schwenkwinkel des Rohrstücks relativ zum Halteabschnitt begrenzenden Anschlag. Er kann bspw. mit einem von dem Anschlagzwischenstück abragenden Anschlaglappen zusammenwirken und hierbei an der die Breite begrenzenden Schmalkante des Anschlaglappens anstoßen.

Das Lagerrohrstück kann in einen Sockel des Halteabschnittes übergehen. Der den Sockel aufweisende Hauptkörper des Halteabschnittes ragt somit seitlich von dem Lagerrohrstück ab. Dies bietet dann die optionale Möglichkeit, dass das Anschlagzwischenrohrstück auf dem Sockel aufliegt und somit in Längsrichtung des Rohrstücks lagefixiert ist. So kann bspw. ein vom Anschlagzwischenstück abragender Anschlaglappen gleichzeitig als Auflager auf dem Sockel genutzt werden.

Durch den Innenraum des Halteabschnittes und des Rohrstücks kann ein elektrisches Kabel geführt sein. Dann ist zur Verhinderung einer Verdrillung des Kabels sicherzustellen, dass der Schwenkwinkel des Rohrstücks begrenzt wird. In diesem Falle empfiehlt es sich daher, dass das Anschlagzwischenstück genutzt wird, um einen Anschlag zu bilden.

Denkbar ist aber auch, dass eine elektrische Schleifringanordnung zwischen dem Halteabschnitt und dem Rohrstück zur Bereitstellung einer elektrischen Schleifkontaktverbindung vorhanden ist. In diesem Falle wird kein den Schwenkwinkel begrenzender Anschlag zwingend benötigt. Daher kann bei dieser Ausführungsform die Tragvorrichtung auch ohne ein mitgeliefertes Anschlagzwischenstück verwendet werden.

Eine Tragvorrichtung wird daher vorzugsweise als Set bereitgestellt, bei dem an dem Rohrstück wahlweise die elektrische Schleifringanordnung oder das Anlagezwischenstück anbringbar ist.

Die Erfindung wird nachfolgend anhand eines Ausführungsbeispiels mit den beigefügten Zeichnungen näher erläutert. Es zeigen:
- Figur 1: - Seitenansicht einer Tragvorrichtung mit einem Rohrstück und einem Halteabschnitt sowie einem Anschlagzwischenstück;
- Figur 2: - perspektivische Explosionsansicht des freien Endes des Rohrstücks und des separaten Anschlagzwischenstücks;
- Figur 3: - perspektivische Ansicht der Tragvorrichtung aus Figur 1 mit Halteringen in der Vorraststellung;
- Figur 4: - perspektivische Ansicht der Tragvorrichtung aus Figur 1 mit verrastetem Haltering;
- Figur 5: - perspektivische Ansicht einer zweiten Ausführungsform eines Rohrstücks;
- Figur 6: - perspektivische Ansicht einer zweiten Ausführungsform eines Anschlagzwischenstücks ;
- Figur 7: - perspektivische Ansicht einer dritten Ausführungsform eines Rohrstücks mit Verzahnung;
- Figur 8: - perspektivische Ansicht einer dritten Ausführungsform eines Anschlagzwischenstücks mit Verzahnung.

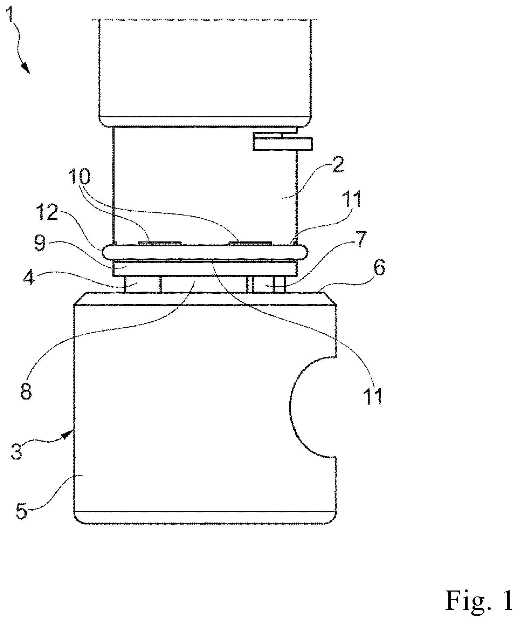

Figur 1 lässt eine Seitenansicht eines Ausschnittes einer Tragvorrichtung 1 erkennen, die ein Rohrstück 2 und einen Halteabschnitt 3 hat. Das Rohrstück 2 ist schwenkbar an dem Halteabschnitt 3 gelagert, indem es auf ein Lagerrohrstück 4 des Halteabschnittes 3 aufgesteckt ist. Erkennbar ist, dass der Halteabschnitt 3 einen Hauptkörper 5 mit einem größeren Durchmesser als das Lagerrohrstück 4 hat. Hierdurch wird auf der in Richtung Rohrstück 2 weisenden Seite ein Sockel 6 gebildet. Von dem Sockel 6 ragt ein Anschlagstift 7 ab, der zusammen mit einem Anschlaglappen 8 eines Anschlagzwischenstücks 9 einen den Schwenkwinkel begrenzenden Anschlag bildet.

Das Anschlagzwischenstück 9 ist in Fortsetzung der Erstreckungsrichtung des Rohrstücks 2 an das freie Ende des Rohrstücks 2 angesetzt, sodass der Anschlaglappen 8 zum Sockel 6 hin abragt. Er kann optional auch auf dem Sockel 6 aufliegen und ein Auflager bilden.

Der Anschlaglappen 8 ist an einer ringförmig umlaufenden, d.h. rohrförmigen Kontur des Anschlagzwischenstücks 9 angeordnet, von dem entgegengesetzt zum Anschlaglappen 8 Ergänzungszungen 10 abragen. Diese Ergänzungszungen 10 tauchen in Zwischenräume ein, die zwischen Zungen 11 des Rohrstücks 2 gebildet werden. Damit ergänzt das Anschlagzwischenstück 9 mit seinen Ergänzungszungen 10 das freie Ende des Rohrstücks 2 umfangsseitig und verlängert das Rohrstück 2.

Um das Anschlagzwischenstück 9 an dem Rohrstück 2 zu halten ist ein Haltering 12 vorgesehen, der das Rohrstück 2 und das Anschlagzwischenstück 9 umschließt und im Bereich der Zungen 11 und Ergänzungszungen 10 mit diesen verrastet ist.

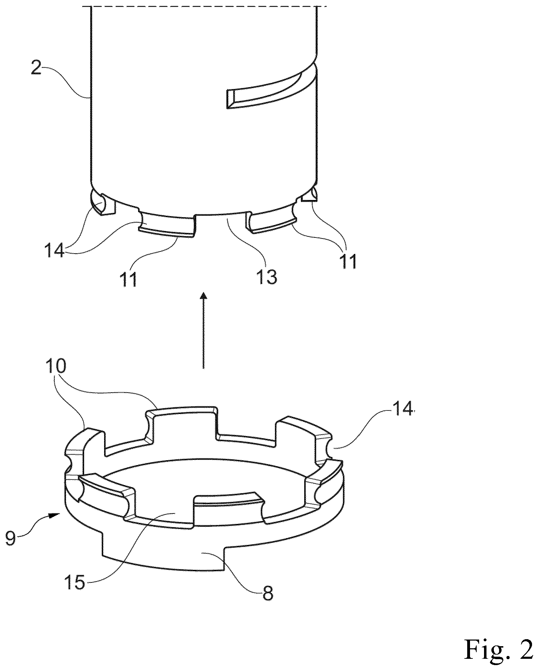

Figur 2 lässt eine perspektivische Explosionsansicht eines Ausschnittes des Rohrstücks 2 und des separaten Anschlagzwischenstücks 9 erkennen. Deutlich wird, dass von dem freien Ende des Rohrstücks eine Anzahl von Zungen 11 abragen, die am Umfang verteilt angeordnet sind, wobei jeweils ein Zwischenraum 13 zwischen den Zungen 11 vorhanden ist. Die Zungen 11 können eine gleichbleibende Breite haben und gleichverteilt angeordnet sein, sodass die Zwischenräume 13 über den Umfang des Rohrstücks 2 verteilt ebenfalls eine gleichbleibende Breite aufweisen. Deutlich wird weiterhin, dass an der Außenseite der Zungen 11 Rastmulden 14 vorhanden sind, die sich umfangsseitig erstrecken und eine Vertiefung in den Zungen 11 bilden.

Von dem Anschlagzwischenstück 9 ragen in gleicher Weise Ergänzungszungen 10 ab, die ebenfalls einen Zwischenraum 15 zwischen sich frei lassen. Die Ergänzungszungen 10 sind mit ihrer Breite an die Breite der Zwischenräume 13 angepasst, sodass die Ergänzungszungen 10 vorzugsweise möglichst nahtlos oder auch gegebenenfalls unter Belassung von Spalten in die Zwischenräume 13 des Rohrstücks 2 eingesetzt werden. Die Ergänzungszungen 10 ergänzen mit den Zungen 11 das Rohrstück 2 somit umfangsseitig, sodass das Rohrstück 2 durch das Anschlagzwischenstück 9 quasi verlängert wird. Die Ergänzungszungen 10 haben an ihrer Außenseite ebenfalls Rastmulden 14, die sich ebenfalls umfangsseitig erstrecken.

Deutlich wird weiterhin, dass sich von dem Anschlagzwischenstück 9 in entgegengesetzte Richtung zu den Ergänzungszungen 10 ein Anschlaglappen 8 abragt. Der Anschlaglappen 8 hat eine Breite, mit der der gewünschte Schwenkwinkel festgelegt wird.

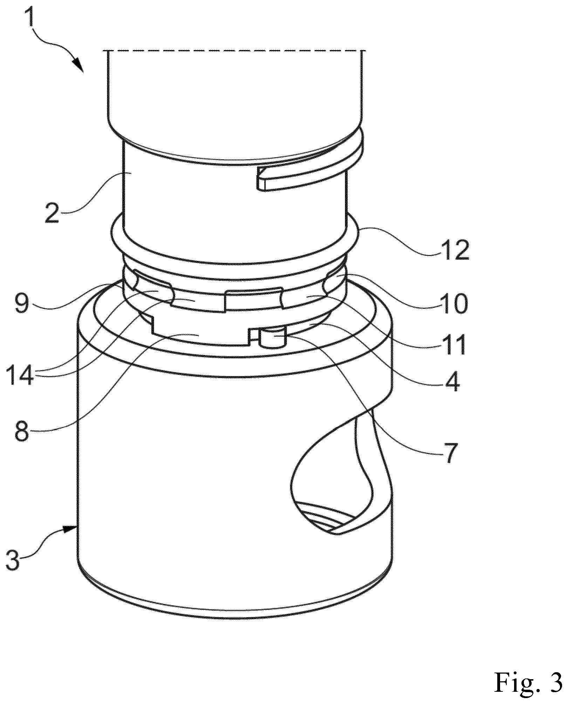

Figur 3 lässt eine perspektivische Ansicht der Tragvorrichtung 1 aus Figur 1 erkennen, bei der das Anschlagzwischenstück 9 auf das freie Ende des Rohrstücks 2 aufgesetzt ist. Deutlich wird, dass die Ergänzungszungen 10 in die durch die Zungen 11 bereitgestellten Zwischenräume des Rohrstücks 2 eintauchen und das Rohrstück 2 somit umfangsseitig ergänzt wird. Auf dem Rohrstück 2 befindet sich ein Haltering 16, der in der dargestellten Vorrastposition elastisch gedehnt ist. Erkennbar ist weiterhin, dass die Rastmulden 14 an der Außenseite der Zungen 11 und Ergänzungszungen 10 in der dargestellten Steckposition, bei der das Anschlagzwischenstück 9 an das Rohrstück 2 angesetzt ist, eine umlaufende Rastnut bilden. Das Anschlagzwischenstück 9 kann nun an dem Rohrstück 2 befestigt werden, wenn der Haltering 16 in Richtung Halteabschnitt 3 heruntergedrückt wird und dabei in die Rastmulden 14 eintaucht.

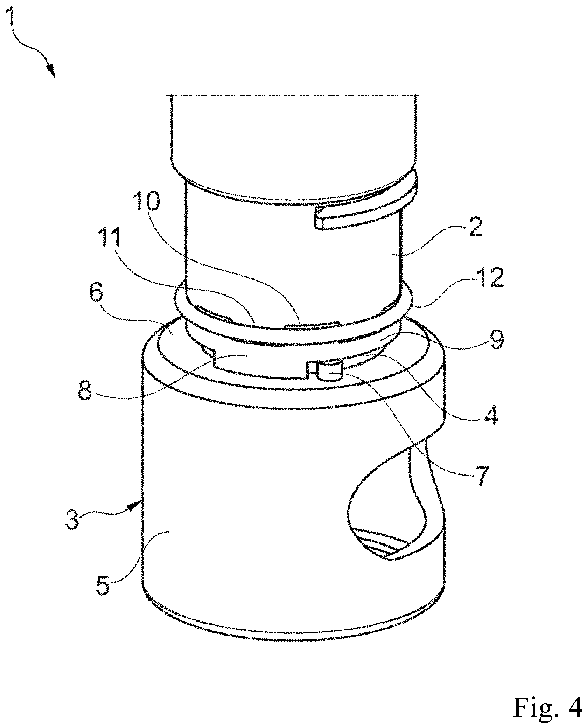

Figur 4 zeigt die Tragvorrichtung 1 aus Figuren 1 und 3 nunmehr in der Rastposition. Deutlich wird, dass der Haltering 16 in Richtung Sockel 6 verlagert ist und nunmehr im Bereich der Zungen 11 und Ergänzungszungen 10 durch die Rastmulden festgelegt ist. Dabei wird weiterhin deutlich, dass der Anschlagstift 7 zusammen mit der Anschlagkontur des Anschlagelementes in Form des Anschlaglappens 8 einen den Schwenkwinkel begrenzenden Anschlag bildet. Das Rohrstück 2 kann nur in einem durch die Breite des Anschlaglappens 8 vorgegebenen Schwenkwinkel um das Lagerrohrstück 4 herumgeschwenkt bzw. herumgedreht werden, sodass in den beiden Anschlag-Endpositionen jeweils die Schmalkante des Anschlaglappens 8 an dem Anschlagstift 7 anstößt.

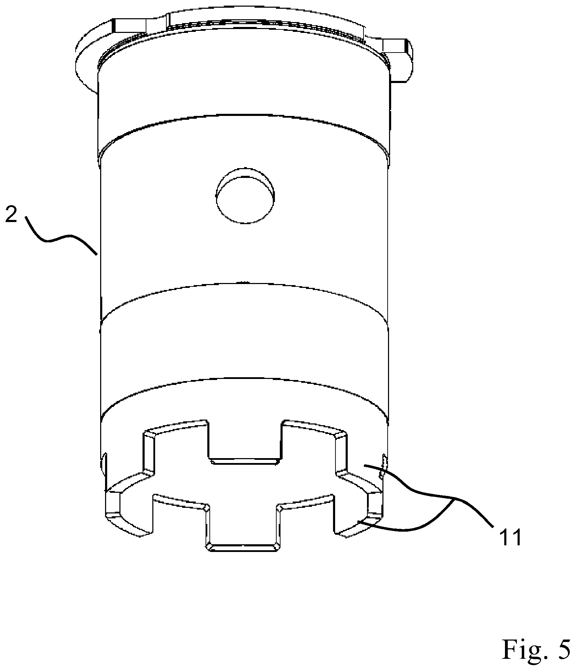

Figur 5 zeigt eine zweite Ausführungsform eines Rohrstücks 2, das an seiner Stirnkante im unteren Ende in Längserstreckungsrichtung des Rohrstücks 2 abragende Ergänzungszungen 11 hat. Insofern ist das Rohrstück mit dem Rohrstück des ersten Ausführungsbeispiels prinzipiell vergleichbar. Durch diese Ergänzungszungen 11 werden wiederum Kopplungsvorsprünge gebildet.

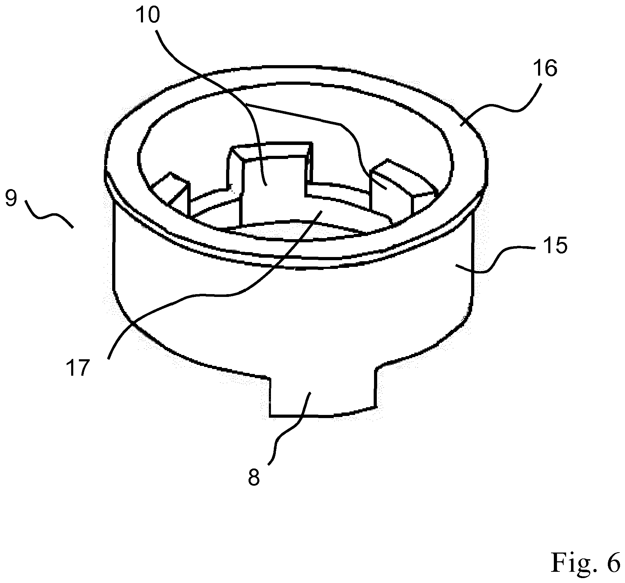

Figur 6 lässt eine zweite Ausführungsform des Anschlagszwischenstücks 9 erkennen, das aus einer ringförmigen Hülse 15, d. h. einem Hülsenring gebildet ist. Am oberen Ende des Hülsenrings kann ein umlaufender, nach Außen gewölbter Kragen 16 vorhanden sein, durch den die Bauteilspannung des Anschlagszwischenstücks insbesondere beim Anschlagen auftretenden Kräften und Momenten reduziert werden kann. Am Innenumfang der Hülse 15 sind die Ergänzungszungen 10 einstückig angeformt. Sie ragen von der Innenwand der Hülle 15 ab. Am unteren Ende der Hülse 15 ist optional ein radial umlaufender Steg 17 vorgesehen, der die Einstecktiefe des Anschlagzwischenstücks 9 auf das Rohrstück 2 begrenzt.

Von der Hülse 15 ragt wiederum in entgegengesetzte Richtung der Ergänzungszungen 10 ein Anschlaglappen 8 zur Bildung der Anschlagkontur ab. Dies ist mit dem vorher beschriebenen ersten Ausführungsbeispiel vergleichbar.

Bei diesem Ausführungsbeispiel wird die Hülse 15 auf den Außenumfang des Rohrstücks 2 an dessen freies Ende aufgeschoben und damit konzentrisch zum Rohrstück 2 lagefixiert.

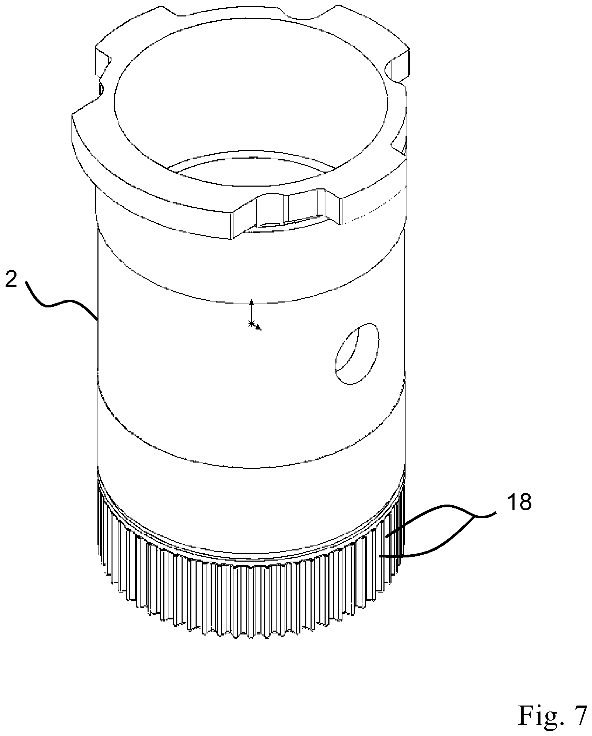

Figur 7 zeigt eine perspektivische Ansicht einer dritten Ausführungsform des Rohrstücks 2, das an dem unteren Ende an seinem Außenumfang eine Verzahnung trägt, die durch radial am Umfang des Rohrstücks 2 angeordnete Zahnflanken 18 gebildet wird. Die Zahnflanken 18erstrecken sich dabei jeweils in Längserstreckungsrichtung des Rohrstücks 2. Zwischen benachbarten Zahnflanken 18 ist dabei jeweils ein Zwischenraum gebildet, um eine korrespondierende Zahnflanke 19 eines Anschlagszwischenstücks 9 dort aufzunehmen.

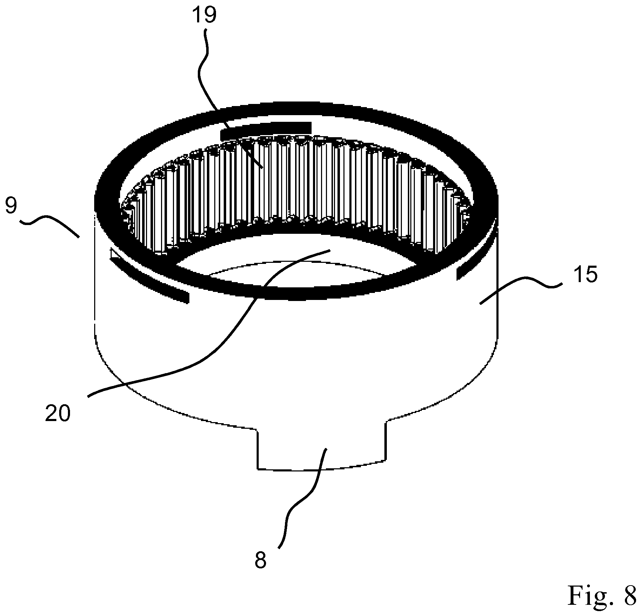

Figur 8 zeigt eine perspektivische Ansicht einer dritten Ausführungsform des Anschlagszwischenstücks 9, das wie im zweiten Ausführungsbeispiel aus einer Hülse 15 gebildet ist. Am Innenumfang der Hülse 15 sind Ergänzungs-Kopplungsvorsprünge durch einen über den Innenumfang verteilt angeordnete Zahnflanken 19 gebildet, die eine Verzahnung zur formschlüssigen Kopplung des Anschlagzwischenstücks 9 mit der Verzahnung des Rohrstücks 2 bilden, wenn das Anschlagzwischenstück 9 auf das Ende des Rohrstücks 2 aufgesteckt wird.

Wiederum kann im unteren Bereich des Innenumfangs der Hülse 15 des Anschlagszwischenstücks 9 ein umlaufender Steg 20 vorhanden sein, der die Einstecktiefe und die Aufstecktiefe des Anschlagzwischenstücks 9 auf das Rohrstück 2 begrenzt.

Das Anschlagzwischenstück 9 kann nun wahlweise an das Rohrstück 2 angebracht werden, insbesondere wenn ein elektrisches Kabel durch den Innenraum des Halteabschnittes 3 und des Rohrstücks 2 hindurchgeführt wird. Damit wird ein Verdrillen des Kabels durch unbegrenztes Verschwenken der Tragvorrichtung 1 sicher verhindert.

Alternativ kann aber auch auf das Anschlagzwischenstück 9 verzichtet werden, z. B. wenn eine elektrische Schleifringanordnung zur Bereitstellung einer elektrischen Schleifkontaktverbindung zwischen Halteabschnitt 3 und Rohrstück 2 bzw. den daran angeordneten Teilen der Tragvorrichtung 1 vorgesehen ist. Diese Schleifringanordnung kann dann bedarfsweise anstelle des Anschlagzwischenstücks 9 in den Übergang zwischen Rohrstück 2 und Halteabschnitt 3 eingebaut werden.

## Patentansprüche

1. Tragvorrichtung (1) mit einem schwenkbar gelagerten Tragarm zum Tragen von Geräten, wobei die Tragvorrichtung (1) ein Rohrstück (2) hat, das schwenkbar an einem Halteabschnitt (3) gelagert ist, und wobei zwischen dem Rohrstück (2) und dem Halteabschnitt (3) ein zur Beschränkung des Schwenkwinkels wirkender Anschlag vorhanden ist, wobei
- das freie Ende des Rohrstücks (2) über den Umfang verteilt angeordnete Kopplungsvorsprünge hat, und
- ein an den Umfang des Rohrstücks (2) angepasstes Anschlagzwischenstück (9) mit über den Umfang verteilt angeordneten Ergänzungs-Kopplungsvorsprüngen vorgesehen ist,
- wobei die Ergänzungs-Kopplungsvorsprünge zum Eintauchen in die Zwischenräume (13) zwischen benachbarten Kopplungsvorsprüngen des Rohrstücks (2) ausgebildet sind und das Anschlagzwischenstück (9) eine mit einem Anschlagelement des Halteabschnittes (3) zusammenwirkende Anschlagkontur hat,
wobei
- die Kopplungsvorsprünge an der Stirnkante am Ende des Rohrstücks (2) in Längserstreckungsrichtung des Rohrstücks abragen, und
- die Kopplungsvorsprünge des Rohrstücks (2) als über den Umfang verteilt angeordnete Zungen (11) ausgebildet sind, die mit Zwischenräumen (13) im Abstand voneinander angeordnet sind, und die Ergänzungs-Kopplungsvorsprünge des Anschlagzwischenstücks (9) als über den Umfang verteilt angeordnete Ergänzungszungen (10) ausgebildet sind, die im Abstand voneinander angeordnet sind, wobei die Ergänzungszungen (10) zum Eintauchen in die Zwischenräume (13) zwischen den Zungen (11) des Rohrstücks (2) ausgebildet sind,
- **dadurch gekennzeichnet, dass** die Zungen des Rohrstücks (2) und die Ergänzungszungen (10) des Anschlagzwischenstücks (9) an ihrer Außenseite eine Rastmulde (14) haben, und dass die Tragvorrichtung (1) einen Haltering (12) zum Einsetzen in eine durch die Rastmulden (14) der Zungen (11) und Ergänzungszungen (10) im Zustand, bei dem das Anschlagzwischenstück (9) an das Rohrstück (2) angesetzt ist, gebildete umlaufende Rastnut hat.

2. Tragvorrichtung (1) nach Anspruch 1, **dadurch gekennzeichnet, dass** die Anschlagkontur des Anschlagzwischenstücks (9) einen in longitudinaler Richtung des Anschlagzwischenstücks (9) abragenden Anschlaglappen (8) aufweist

3. Tragvorrichtung (1) nach einem der vorhergehenden Ansprüche, **dadurch gekennzeichnet, dass** der Anschlaglappen (8) in entgegengesetzte Richtung zu den Ergänzungs-Kopplungsvorsprüngen abragt.

4. Tragvorrichtung (1) nach einem der vorhergehenden Ansprüche, **dadurch gekennzeichnet, dass** der Halteabschnitt (3) ein Lagerrohrstück (4) zum Einstecken in das Rohrstück (2) der Tragvorrichtung (1) hat.

5. Tragvorrichtung (1) nach einem der vorhergehenden Ansprüche, **dadurch gekennzeichnet, dass** von dem Halteabschnitt (3) ein Anschlagstift (7) in Richtung des an dem Halteabschnitt (3) gelagerten Rohrstücks (2) abragt.

6. Tragvorrichtung (1) nach Anspruch 3 oder 4, **dadurch gekennzeichnet, dass** das Lagerrohrstück (4) in einen Sockel (6) des Halteabschnittes (3) übergeht.

7. Tragvorrichtung (1) nach Anspruch 5, **dadurch gekennzeichnet, dass** das Anschlagzwischenrohrstück (9) auf dem Sockel (6) aufliegt.

8. Tragvorrichtung (1) nach einem der vorhergehenden Ansprüche, **dadurch gekennzeichnet, dass** ein elektrisches Kabel durch den Innenraum des Halteabschnittes (3) und des Rohrstücks (2) geführt ist.

9. Tragvorrichtung (1) nach einem der Ansprüche 1 bis 6, **dadurch gekennzeichnet, dass** eine elektrische Schleifringanordnung zwischen dem Halteabschnitt (3) und dem Rohrstück (2) zur Bereitstellung einer elektrischen Schleifkontaktverbindung vorhanden ist.

10. Tragvorrichtung (1) nach Anspruch 8, **dadurch gekennzeichnet, dass** an dem Rohrstück (2) wahlweise die elektrische Schleifringanordnung oder das Anlagezwischenstück (9) anbringbar ist.

## Claims

1. Carrying device (1) with a pivotally mounted carrying arm for carrying equipment, wherein the carrying device (1) has a tube piece (2) which is pivotally mounted on a holding section (3), and wherein a stop acting to limit the pivoting angle is provided between the tube piece (2) and the holding section (3), wherein
- the free end of the tube piece (2) has coupling projections distributed over the circumference, and
- an stop piece (9) adapted to the circumference of the tube piece (2) with supplementary coupling projections distributed around the circumference is provided,
- wherein the supplementary coupling projections are designed for insertion into the interspace (13) between adjacent coupling projections of the tube piece (2) and the stop piece (9) has a stop contour interacting with a stop element of the holding section (3),
- wherein the coupling projections at the front edge at the end of the tube piece (2) extend in the longitudinal direction of the tube piece (2), and
- the coupling projections of the tube piece (2) are designed as tongues (11) which are distributed over the circumference and are arranged at a distance from one another with interspace (13), and the supplementary coupling projections of the stop piece (9) are designed as supplementary tongues (10) which are distributed over the circumference and are arranged at a distance from one another, wherein the supplementary tongues (10) being designed for insertion into the interspace (13) between the tongues (11) of the tube piece (2),
**characterized in that**
- the tongues of the tube piece (2) and the supplementary tongues (10) of the stop piece (9) have a latching recess (14) on their outside, and **in that** the carrying device (1) has a holding ring (12) for insertion into a circumferential latching groove formed by the latching recesses (14) of the tongues (11) and supplementary tongues (10) in the state in which the stop piece (9) is attached to the tube piece (2).

2. Carrying device (1) according to claim 1, **characterized in that** the stop contour of the stop piece (9) has a stop tab (8) extending in the longitudinal direction of the stop piece (9).

3. Carrying device (1) according to one of the preceding claims, **characterized in that** the stop tab (8) extends in the opposite direction to the supplementary coupling projections.

4. Carrying device (1) according to one of the preceding claims, **characterized in that** the holding section (3) has a bearing tube piece (4) for insertion into the tube piece (2) of the carrying device (1).

5. Carrying device (1) according to one of the preceding claims, **characterized in that** a stop pin (7) extends from the holding section (3) in the direction of the tube piece (2) mounted on the holding section (3).

6. Carrying device (1) according to claim 3 or 4, **characterized in that** the bearing tube piece (4) merges into a socket (6) of the holding section (3).

7. Carrying device (1) according to claim 5, **characterized in that** the stop piece (9) is mounted on the base (6).

8. Carrying device (1) according to one of the preceding claims, **characterized in that** an electric cable is led through the interior of the holding section (3) and the tube piece (2).

9. Carrying device (1) according to one of the claims 1 to 6, **characterized in that** an electrical slip ring arrangement is provided between the holding section (3) and the tube piece (2) for providing an electrical sliding contact connection.

10. Carrying device (1) according to claim 8, **characterized in that** the electrical slip ring arrangement or the stop piece (9) can be optionally attached to the tube piece (2).

## Revendications

1. Dispositif de support (1) comportant un bras de support monté de façon mobile en pivotement et destiné à supporter des appareillages, le dispositif de support (1) présentant une pièce tubulaire (2) qui est montée de façon mobile en pivotement sur une portion de maintien (3), et une butée agissant pour limiter l'angle de pivotement étant présente entre la pièce tubulaire (2) et la portion de maintien (3),
dans lequel
- l'extrémité libre de la pièce tubulaire (2) présente des saillies de couplage disposées en étant réparties sur la circonférence, et
- une pièce de butée intermédiaire (9) adaptée à la circonférence de la pièce tubulaire (2) est munie de saillies de couplage complémentaires disposées en étant réparties sur la circonférence,
- les saillies de couplage complémentaires sont réalisées pour plonger dans les interstices (13) entre les saillies de couplage adjacentes de la pièce tubulaire (2), et la pièce de butée intermédiaire (9) présente un contour de butée coopérant avec un élément de butée de la portion de maintien (3),
- les saillies de couplage sur le bord frontal à l'extrémité de la pièce tubulaire (2) font saillie dans la direction d'extension longitudinale de la pièce tubulaire, et
- les saillies de couplage de la pièce tubulaire (2) sont réalisées sous forme de languettes (11) disposées en étant réparties sur la circonférence, qui sont disposées à distance les unes des autres avec des interstices (13), et les saillies de couplage complémentaires de la pièce de butée intermédiaire (9) sont réalisées sous forme de languettes complémentaires (10) disposées en étant réparties sur la circonférence et disposées à distance les unes des autres, les languettes complémentaires (10) étant réalisées pour plonger dans les interstices (13) entre les languettes (11) de la pièce tubulaire (2),
**caractérisé en ce que**
les languettes de la pièce tubulaire (2) et les languettes complémentaires (10) de la pièce de butée intermédiaire (9) présentent sur leur côté extérieur un évidement d'enclenchement (14), et **en ce que**
le dispositif de support (1) présente une bague de retenue (12) pour l'insertion dans une rainure d'enclenchement périphérique formée par les évidements d'enclenchement (14) des languettes (11) et des languettes complémentaires (10) dans l'état où la pièce de butée intermédiaire (9) est rapportée sur la pièce tubulaire (2).

2. Dispositif de support (1) selon la revendication 1,
le contour de butée de la pièce de butée intermédiaire (9) présente une patte de butée (8) faisant saillie dans la direction longitudinale de la pièce de butée intermédiaire (9).

3. Dispositif de support (1) selon l'une des revendications précédentes,
**caractérisé en ce que** la patte de butée (8) fait saillie dans la direction opposée aux saillies de couplage complémentaires.

4. Dispositif de support (1) selon l'une des revendications précédentes,
**caractérisé en ce que** la portion de maintien (3) présente une pièce tubulaire de montage (4) pour l'insertion dans la pièce tubulaire (2) du dispositif de support (1).

5. Dispositif de support (1) selon l'une des revendications précédentes,
**caractérisé en ce qu'**une goupille de butée (7) fait saillie de la portion de maintien (3) en direction de la pièce tubulaire (2) montée sur la portion de maintien (3).

6. Dispositif de support (1) selon la revendication 3 ou 4,
**caractérisé en ce que** la pièce tubulaire de montage (4) se transforme en un socle (6) de la portion de maintien (3).

7. Dispositif de support (1) selon la revendication 5,
**caractérisé en ce que** la pièce tubulaire de butée intermédiaire (9) repose sur le socle (6).

8. Dispositif de support (1) selon l'une des revendications précédentes,
**caractérisé en ce qu'**un câble électrique est mené à travers l'intérieur de la portion de maintien (3) et de la pièce tubulaire (2).

9. Dispositif de support (1) selon l'une des revendications 1 à 6,
**caractérisé en ce qu'**un ensemble à bague glissante électrique est disposé entre la portion de maintien (3) et la pièce tubulaire (2) pour assurer une connexion électrique de contact glissant.

10. Dispositif de support (1) selon la revendication 8,
**caractérisé en ce que** l'ensemble à bague glissante électrique ou la pièce de butée intermédiaire (9) peut être fixé(e) au choix sur la pièce tubulaire (2).
